# EUROPEAN PATENT APPLICATION

(11) **EP 4 156 726 A1**
(43) Date of publication of application: **29.03.2023**
(21) Application number: 21808518.1
(22) Date of filing: 14.05.2021
(51) Int. Cl.: H04W 4/06, H04W 4/021, H04W 76/40, H04W 8/08

(54) **MULTICAST-RELATED COMMUNICATION**

(30) Priority: 22.05.2020 KR 20200061451; 18.08.2020 KR 20200103313; 22.09.2020 KR 20200122446; 28.01.2021 KR 20210012434
(71) Applicant: LG Electronics, Inc., Yeongdeungpo-gu Seoul 07336 (KR)
(72) Inventor: KIM, Laeyoung, Seoul 06772 (KR); YOUN, Myungjune, Seoul 06772 (KR)
(74) Representative: Mooser, Sebastian Thomas
(86) International application number: PCT/KR2021/006080
(87) International publication number: WO 2021/235779

(57) **Abstract**

A disclosure of the present specification provides a method for performing multicast-related communication by a LTE. The method may comprise the steps of: on the basis of first location information on a service area related to a local multicast service, determining that the UE is located within the service area; on the basis of the determination that the UE is located within the service area, transmitting, to an SMF, a first join request message to join the local multicast service; and receiving a join rejection message from the SMF in response to the first join request message.

## Description

### TECHNICAL FIELD

The present disclosure relates to mobile communication.

### Background

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Meanwhile, in 5G mobile communication, multicast communication (e.g., communication based on Multicast-Broadcast Services (MBS)) has been introduced. A terminal (e.g., user equipment (UE)) and a network may perform multicast communication in a 5G system (5GS) in a multicast method. In addition, local multicast communication in which a multicast communication service is provided in a certain service area is also introduced.

However, a method for effectively supporting a local multicast communication service has not been discussed in the prior art. For example, a method for effectively providing information on a service area in which a local multicast communication service is provided to a LTE has not been discussed. For example, the LTE obtains location information for a multicast communication service from an Application Function (AF), but if this location information and the location information used by the 5GS network are different, there is a problem that the local multicast communication service cannot be effectively supported.

### SUMMARY

Accordingly, a disclosure of the present specification has been made in an effort to solve the aforementioned problem.

In order to solve the above problems, one disclosure of the present specification provides a method for a UE to perform multicast-related communication. The method includes: determining that the UE is located within the service area, based on first location information for a service area related to a local multicast service; transmitting a first join request message for participating in the local multicast service to the SMF based on it being determined that the UE is located in the service area; and receiving a join rejection message from the SMF in response to the first join request message.

In order to solve the above problems, one disclosure of the present specification provides a LTE that performs multicast-related communication. The LTE includes at least one processor; and at least one memory that stores an instruction and is operably electrically connectable with the at least one processor, wherein the operations performed based on the instruction being executed by the at least one processor comprises: determining that the UE is located within the service area, based on first location information for a service area related to a local multicast service; transmitting a first join request message for participating in the local multicast service to the SMF based on it being determined that the LTE is located in the service area; and receiving a join rejection message from the SMF in response to the first join request message.

In order to solve the above problems, one disclosure of the present specification may provide an apparatus in mobile communication. The apparatus includes at least one processor; and at least one memory that stores an instruction and is operably electrically connectable with the at least one processor, wherein the operations performed based on the instruction being executed by the at least one processor comprises: determining that the device is located within the service area based on first location information for a service area related to a local multicast service; generating a first join request message for joining the local multicast service based on it being determined that the device is located within the service area; and in response to the join request message, identifying a join rejection message.

In order to solve the above problems, one disclosure of the present specification may provide a non-transitory computer-readable storage medium recording instructions. The instructions, when executed by one or more processors, cause the one or more processors to: determining that the device is located within the service area based on first location information for a service area related to a local multicast service; generating a first join request message for joining the local multicast service based on it being determined that the device is located within the service area; and in response to the join request message, identifying a join rejection message.

In order to solve the above problems, one disclosure of the present specification provides a method for SMF to perform multicast-related communication. The method includes: receiving, from the UE, a first join request message for participating in a local multicast service; determining whether the UE is located in the service area based on location information on a service area related to the local multicast service; and, based on determining that the UE is not located within the service area, transmitting a join rejection message to the UE in response to the first join request message.

In order to solve the above problems, one disclosure of the present specification provides an SMF for performing multicast-related communication. The SMF includes at least one processor; and at least one memory that stores an instruction and is operably electrically connectable with the at least one processor, wherein the operation performed based on the instruction being executed by the at least one processor comprises: receiving, from the LTE, a first join request message for participating in a local multicast service; determining whether the UE is located in the service area based on location information on a service area related to the local multicast service; and, based on determining that the LTE is not located within the service area, transmitting a join rejection message to the UE in response to the first join request message.

According to the disclosure of the present specification, it is possible to solve the problems of the related art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to whiche implementations of the present disclosure is applied.
FIG. 3 shows an example of a wireless device to which implementations of the present disclosure is applied.
FIG. 4 is a structural diagram of a next-generation mobile communication network.
FIG. 5 is an exemplary diagram illustrating a predicted structure of a next generation mobile communication in terms of a node.
FIG. 6 shows an example of a signal flow diagram according to a first example of the disclosure of the present specification.
FIGS. 7a and 7b show an example of a signal flow diagram according to a second example of the disclosure of the present specification.
FIG. 8 shows an example of a signal flow diagram according to a third example of the disclosure of the present specification.
FIG. 9 shows an example of an operation of a network node and an operation of a terminal according to an embodiment of the disclosure of the present specification.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the LTE may be a laptop computer, a mobile phone, a PDA, a smartphone, a multimedia device, or other portable device, or may be a stationary device such as a PC or a car mounted device.

Hereinafter, the LTE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

I. Techniques and procedures applicable to the disclosure of the present specification

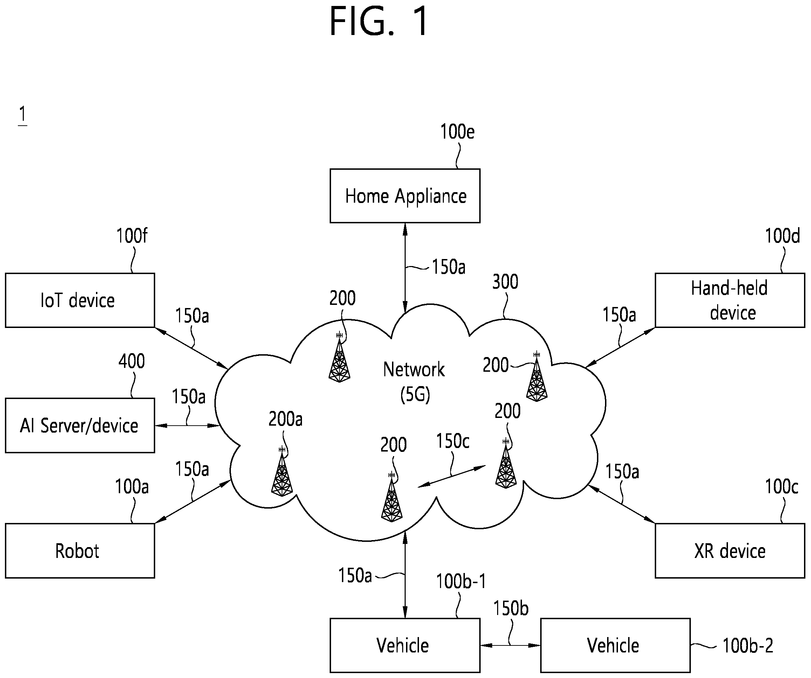

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

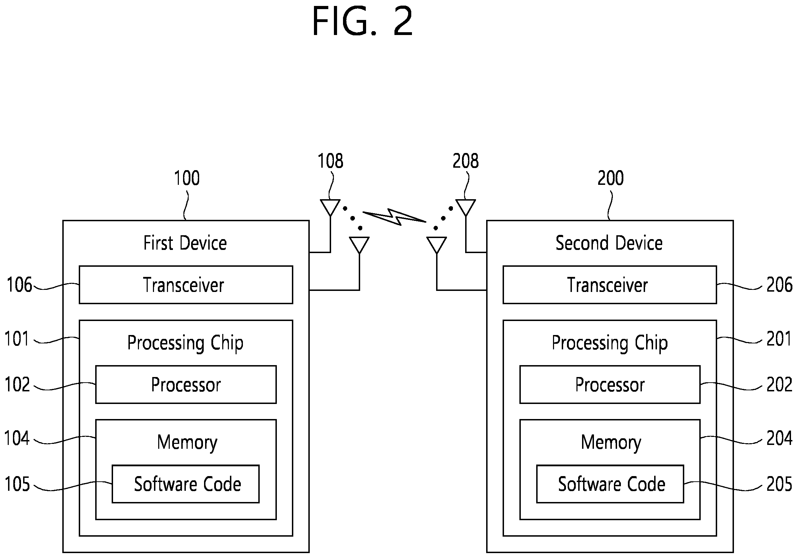

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the LTE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

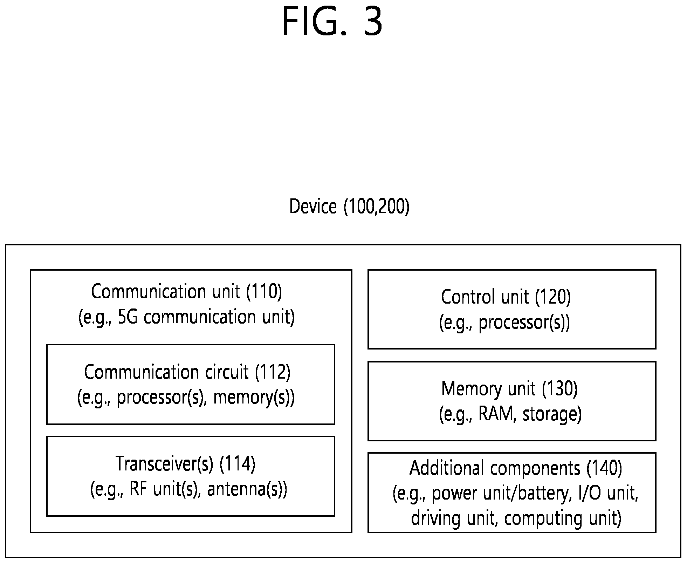

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

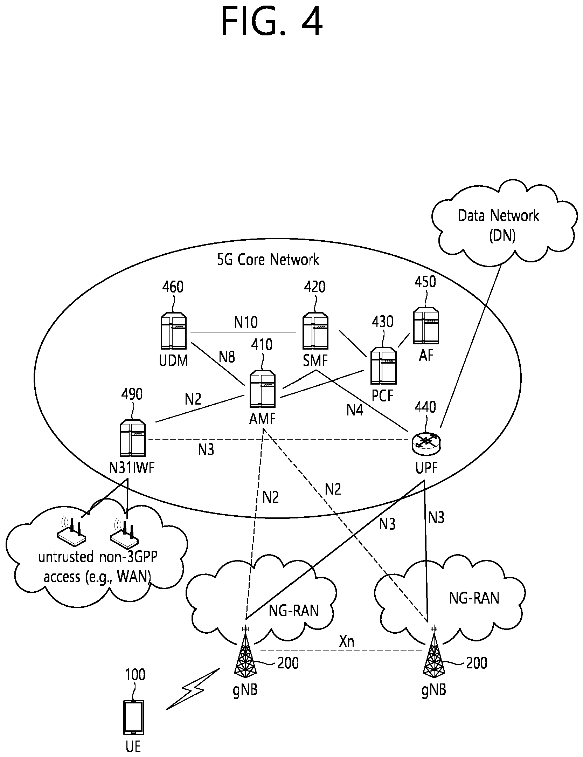

**FIG. 4** **is a structural diagram of a next-generation mobile communication network.**

5GC(5G Core) may include various components, part of which are shown in FIG. 4, including an access and mobility management function (AMF) 410, a session management function (SMF) 420, a policy control function (PCF) 430, a User Plane Function (UPF) 44, an application function (AF) 450, a unified data management (UDM) data network 460, and a non-3GPP(3rd Generation Partnership Project) interworking function (N3IWF) 490.

A LTE 100 is connected to a data network via the UPF 440 through a Next Generation Radio Access Network (NG-RAN) including the gNB 20.

The UE 100 may be provided with a data service even through untrusted non-3GPP access, e.g., a wireless local area network (WLAN). In order to connect the non-3GPP access to a core network, the N3IWF 490 may be deployed.

The illustrated N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The illustrated AMF 410 may manage access and mobility in the 5G system. The AMF 410 may perform a function of managing Non-Access Stratum (NAS) security. The AMF 410 may perform a function of handling mobility in an idle state.

The illustrated UPF 440 is a type of gateway through which user data is transmitted/received. The UPF 440 may perform the entirety or a portion of a user plane function of a serving gateway (S-GW) and a packet data network gateway (P-GW) of 4G mobile communication.

The UPF 440 operates as a boundary point between a next generation radio access network (NG-RAN) and the core network and maintains a data path between the gNB 20 and the SMF 420. In addition, when the UE 100 moves over an area served by the gNB 20, the UPF 440 serves as a mobility anchor point. The UPF 440 may perform a function of handling a PDU. For mobility within the NG-RAN (which is defined after 3GPP Release-15), the UPF 440 may route packets. In addition, the UPF 540 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 44 may correspond to a termination point of a data interface toward the data network.

The illustrated PCF 430 is a node that controls an operator's policy.

The illustrated AF 450 is a server for providing various services to the UE 100.

The illustrated UDM 460 is a kind of server that manages subscriber information, such as home subscriber server (HSS) of 4G mobile communication. The UDM 460 stores and manages the subscriber information in a unified data repository (UDR).

The illustrated SMF 420 may perform a function of allocating an Internet protocol (IP) address of the UE. In addition, the SMF may control a protocol data unit (PDU) session.

For reference, hereinafter, reference numerals for AMF (410), SMF (420), PCF (430), UPF (440), AF (450), UDM (460), N3IWF (490), gNB (20), or UE (100) may be omitted.

The 5^{th} generation mobile communcation supports a plurality of numerologies (e.g. a plurality of values of subcarrier spacing (SCS)) in order to support various services. For example, when the SCS is 15 kHz, a wide area in traditional cellular bands is supported. When the SCS is 30 kHz/60 kHz, a dense-urban, lower-latency, and wider carrier bandwidth is supported. When the SCS is 60 kHz or greater, a bandwidth greater than 24.25 GHz is supported in order to overcome phase noise.

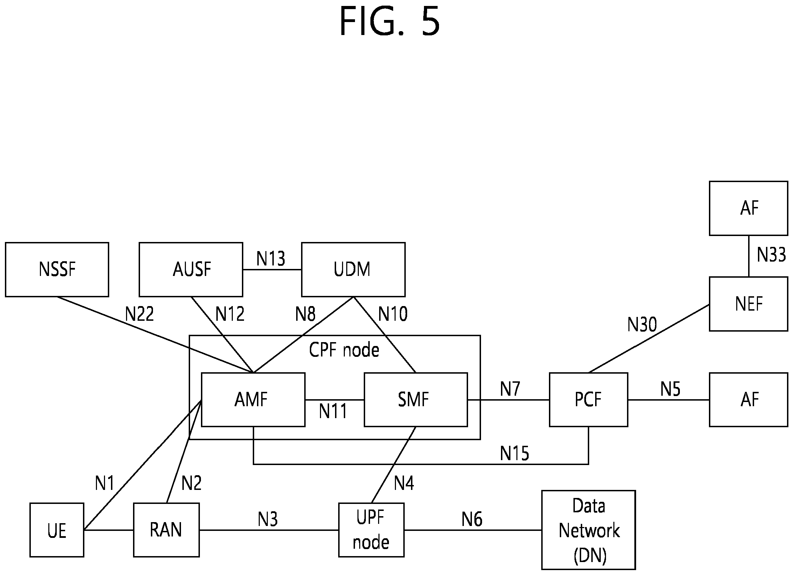

**FIG. 5** **is an exemplary diagram illustrating a predicted structure of a next generation mobile communication in terms of a node.**

Referring to FIG. 5, the LTE is connected to a data network (DN) through a next generation RAN (Radio Access Network).

The Control Plane Function (CPF) node shown in FIG. 5 may perform all or part of the Mobility Management Entity (MME) function of the fourth generation mobile communication, and all or a part of the control plane function of the Serving Gateway (S-GW) and the PDN (Packet Data Network)-gateway (P-GW) of the fourth generation mobile communication. The CPF node includes an Access and Mobility Management Function (AMF) node and a Session Management Function (SMF) node.

The user plane function (UPF) node shown in the drawing is a type of a gateway over which user data is transmitted and received. The UPF node may perform all or part of the user plane functions of the S-GW and the P-GW of the fourth generation mobile communication.

The Policy Control Function (PCF) node shown in FIG. 5 is configured to control a policy of the service provider.

The illustrated Application Function (AF) node refers to a server for providing various services to the UE.

The Unified Data Management (UDM) node as shown refers to a type of a server that manages subscriber information, such as a Home Subscriber Server (HSS) of 4th generation mobile communication. The UDM node stores and manages the subscriber information in the Unified Data Repository (UDR).

The Authentication Server Function (AUSF) node as shown authenticates and manages the UE.

The Network Slice Selection Function (NSSF) node as shown refers to a node for performing network slicing as described below.

The illustrated Network Exposure Function (NEF) is a node for providing a mechanism to securely expose services and functions of the 5G core. For example, NEF exposes functions and events, securely provides information from external applications to the 3GPP network, translates internal/external information, provides control plane parameters, and manages packet flow description (PFD).

The descriptions of the reference points shown in FIG. 5 are as follows.

N1 represents Reference point between UE and AMF.

N2 represents Reference point between NG-RAN and AMF.

N3 represents Reference point between NG-RAN and UPF.

N4 represents Reference point between SMF and UPF.

N5 represents Reference point between PCF and AF.

N6 represents Reference point between UPF and DN.

N7 represents Reference point between SMF and PCF.

N8 represents Reference point between UDM and AMF.

N9 represents Reference point between UPFs.

N10 represents Reference point between UDM and SMF.

N11 represents Reference point between AMF and SMF.

N12 represents Reference point between AMF and AUSF.

N13 represents Reference point between UDM and AUSF.

N14 represents Reference point between AMFs.

N15 represents Reference point between PCF and AMF in a non-roaming scenario and reference point between AMF and PCF of visited network in roaming scenario.

N16 represents Reference point between SMFs.

N22 represents Reference point between AMF and NSSF.

N30 represents Reference point between PCF and NEF.

N33 represents Reference point between AF and NEF.

In FIG. 5, AF by a third party other than an operator may be connected to SGC through a network exposure function (NEF).

### II. Problems to be solved in the disclosure of this specification

Hereinafter, examples of problems to be solved in the disclosure of the present specification will be described.

A plan to support MBS (Multicast-Broadcast Services) in 5GS is being discussed. For example, architectural enhancements for 5G MBS are being discussed. Supporting MBS in 5GS is being discussed to achieve the following goals, for example:

The goal of discussing how to support MBS in 5GS may be to identify and evaluate potential enhancements of the 5G system architecture, in order to provide MBS service that can be used for various vertical businesses. An example of the goal of a scheme to support MBS in 5GS is the following example:
- To support multicast/broadcast services, a framework including a functional split between (R)AN and CN can be defined. For example, a multicast/broadcast service may include ad-hoc multicast/broadcast stream, transparent IPv4 / IPv6 multicast delivery, IPTV, software delivery over wireless, group communication and broadcast/multicast Internet on Things (IoT) applications, V2X applications, public safety, etc.
- It can support various levels of service. For example, a transport only mode and a full service mode may be supported.
- Enables flexible network deployment (e.g., distributed and/or centralized) and flexible network operation (e.g., CP (Control Plane)-UP (User Plane) separation).
- Describe whether QoS and PCC rules are applicable to multicast/broadcast services and how QoS and PCC rules relate to multicast/broadcast services.
- Can support requirements for public safety (e.g. service continuity) and use cases.

A method of supporting MBS in 5GS with a focus on radio access technology according to NR among NG-RANs may be discussed. Support for UEs using access that does not support multicast/broadcast or moving to such access may be considered.

Regarding MBS in 5GS, issues such as the following examples are being discussed. For example, the issue of local MBS service support is being discussed.

Vehicle-to-everything (V2X) services, public safety services and other services may be provided locally. When the service is provided locally, there may be a multicast communication service or a broadcast communication service that is available only in the local service area (e.g. cell, Tracking Area (TA), or other geographic metric) during a specific time(e.g., during event hours, emergencies, or operating hours)

In this situation, different application servers may be allocated to control a multicast communication service or a broadcast communication service in each service area. The UEs may be configured to receive information about an available multicast service or an available broadcast service in an area where the UE is located.

Therefore, to support local multicast communication and local broadcast communication, aspects such as the following examples can be studied:
- Whether additional specific functionality and additional specific information (e.g., geographical range for broadcast service area/multicast service area) are required to provide local multicast communication and local broadcast communication in a resource efficient manner in the 5G system. If these additional specific features and additional specific information are required, how to utilize the additional specific features and additional specific information;
- A method for supporting a UE to discover and receive locally available multicast communication services and broadcast communication services in a 5G system in a resource-efficient manner.

Conventionally, a method for efficiently and/or effectively supporting a local multicast communication service has not been discussed. That is, in the prior art, a multicast communication service serviced only in a specific area could not be efficiently and/or effectively supported. For example, a method for effectively providing information on a service area in which a local multicast communication service is provided to a UE has not been discussed. For example, the UE obtains location information for a multicast communication service from an Application Function (AF), if this location information and the location information used by the SGS network are different, there is a problem that the local multicast communication service cannot be effectively supported.

For a specific example, the MBS service area information provided by the UE from the AF may not be 3GPP location type location information(e.g., Cell ID list, list of gNB, and/or TAI list), but may be non-3GPP location type location information(e.g. geographical area information or civic address information). In this case, the UE may determine that the UE is within the service area based on location information in the form of non-3GPP location(e.g. geographical area information or civic address information), and may perform a Join request to a network node (e.g., AMF or SMF, etc.). However, in terms of location information in the form of 3GPP location (e.g., Cell ID list, list of gNB, and/or TAI list), since the LTE is outside the service area, a situation may occur in which the network node (e.g., AMF or SMF) rejects the Join request.

### III. Disclosure of the present specification

The disclosures described below in this specification may be implemented in one or more combinations (e.g., a combination including at least one of the contents described below). Each of the drawings shows an embodiment of each disclosure, but the embodiments of the drawings may be implemented in combination with each other.

The description of the method proposed in the disclosure of the present specification may consist of a combination of one or more operations/configurations/steps described below. The following methods described below may be performed or used in combination or complementarily.

The disclosure of the present specification describes a method for supporting a local multicast service. That is, various examples of the disclosure of the present specification describe a method for supporting a multicast service serviced only in a specific area. For reference, a multicast service serviced only in a specific area may be interpreted as a service in which a network transmits traffic only to UEs in a specific area.

The method for supporting the local multicast service described in the disclosure of this specification may be configured based on a combination of one or more operations, configurations, and/or steps among the various operations, configurations, and/or steps described through various examples of the disclosure herein.

In the disclosure of this specification, MBS may be interpreted the same as MBMS (Multimedia Broadcast/Multicast Service).

In the disclosure of this specification, the MBS session may be interpreted as including an MBS multicast session and an MBS broadcast session. In the disclosure of this specification, MBS data and/or MBS traffic may be interpreted as including MBS multicast data and/or MBS multicast traffic and MBS broadcast data and/or MBS broadcast traffic. In addition, the MBS service area or the MBS area may be interpreted as including a multicast service area and a broadcast service area. For reference, in the disclosure of this specification, a service area may mean a service area used for local multicast communication or local broadcast communication. In the disclosure of the present specification, service area, MBS service area, multicast service area, and local service area may all be used as terms having the same meaning.

In the disclosure of this specification, the MBS session and the MB session may be used interchangeably. In other words, in the disclosure of this specification, the MBS session and the MB session may be used as terms having the same meaning.

In the disclosure of this specification, session and service may be used interchangeably. In other words, in the disclosure of the present specification, the terms session and service may be used as terms having the same meaning.

In the disclosure of this specification, a multicast service, a multicast session, and a multicast group may be used interchangeably. In other words, in the disclosure of this specification, multicast service, multicast session, and multicast group may be used as terms having the same meaning.

In the disclosure of this specification, an NG-RAN may mean a gNB, and may include both a gNB and a next generation eNB (ng-eNB).

For MBS support in Evolved General Packet Radio Service (GPRS) and Evolved Packet System (EPS), refer to TS 23.246 V15.1.0, TS 23.468 V15.1.0, TS 26.348 V16.0.0, etc, hereinafter, the content proposed in the disclosure of the present specification will be mainly described.

Hereinafter, the disclosure of the present specification will be described with reference to the first to third examples of the disclosure of the present specification. The first to third examples of the disclosure of the present specification described below may be implemented in combination.

### 1. First example of the disclosure of the present specification

A first example of the disclosure of the present specification describes an example of a procedure in which a network node (e.g., AMF or SMF) processes a Join request for multicast communication.

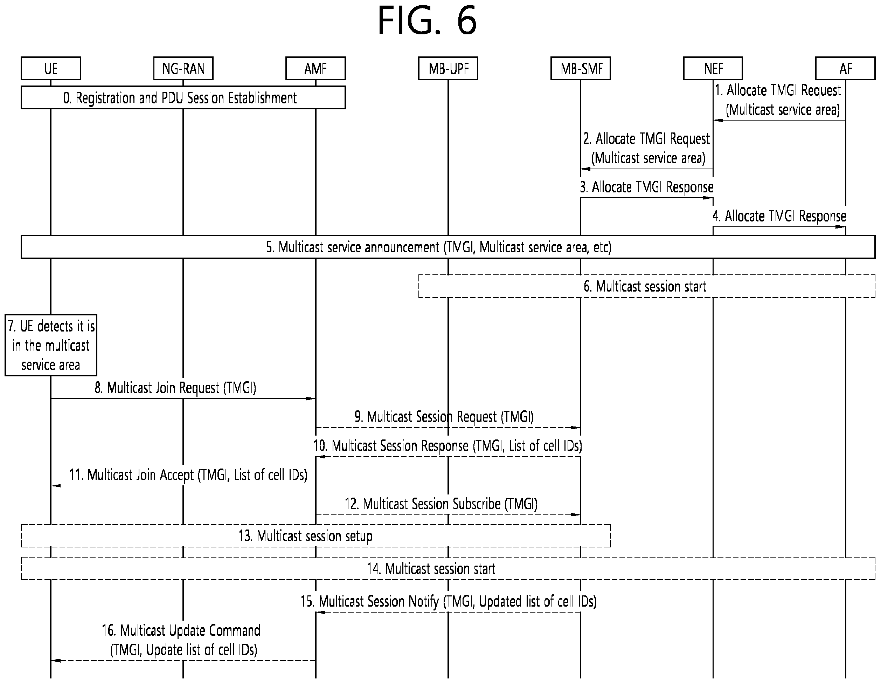

Hereinafter, a first example of the disclosure of the present specification will be described with reference to the example of FIG. 6 .

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 6** **shows an example of a signal flow diagram according to a first example of the disclosure of the present specification.**

The example of FIG. 6 is an example of a procedure for a local multicast service. For reference, the operations performed by the AMF in the example of FIG. 6 may also be performed by the SMF.
0) The UE may perform a registration procedure and a PDU Session Establishment procedure.
1) The AF may transmit an Allocate TMGI request message to the NEF to request allocation of a Temporary Mobile Group Identity (TMGI) for the multicast service. The AF may include information on a multicast service area in the Allocate TMGI request message. The information on the multicast service area may include, for example, a list of Cell IDs or geographic area information.
2) An NEF may transmit Allocate TMGI Request message to MB-SMF. Here, the MB-SMF may be an SMF that manages and/or serves a session (e.g., a multicast session) related to multicast communication and broadcast communication.
   The Allocate TMGI Request message received from AF may include a multicast service area (e.g., geographic area information). In this case, the NEF may convert the geographic area information into List of Cell IDs and include the List of Cell IDs in the Allocate TMGI Request message to be transmitted to the MB-SMF. Alternatively, in step 3) to be described later, the MB-SMF may convert geographic area information into List of Cell IDs.

3) The MB-SMF may allocate a TMGI for multicast service and store the TMGI and List of Cell IDs as multicast service area.

In order for AMF to discover a MB-SMF for a TMGI, the MB-SMF may register the TMGI and a corresponding address (e.g., address of MB-SMF) to NRF.

The MB-SMF may transmit an Allocate TMGI response message including the allocated TMGI to the NEF.

4) A NEF may deliver TMGI to AF. For example, the NEF may transmit an Allocate TMGI Response message including the TMGI to the AMF.

5) Multicast service announcement can be performed. A UE and an AF may exchange application layer signaling. The AF may provide multicast service related information including TMGI and multicast service area (Cell ID list or geographic area information).

The AF can also provide information that the multicast service is a local service.

6) A multicast session may be started. The AF may provide updated multicast service area (e.g. cell ID list or geographic area information). In this case, the MB-SMF may perform a multicast session start using the updated multicast service area and store the updated multicast service area (e.g., a cell ID list).

For reference, the solutions for MBS session management of 3GPP Technical Report (TR) 23.757 V1.2.0 may also be used for multicast session initiation described in the first example of the disclosure of this specification.

7) The UE may detect that the UE is within the multicast service area. For example, the UE may detect that the UE is within a multicast service area based on geo-coordinates in which the UE is located or a cell ID received in a System Information Block (SIB) message.

8) In order to indicate the UE's interest in receiving a specific multicast service identified by the TMGI, the UE may transmit a Multicast Join Request message to the AMF. Multicast Join Request message may include TMGI.

9) If the AMF does not yet have a context for the received TMGI, the AMF may query the NRF to select the MB-SMF for the TMGI. Then, the AMF may indicate the interest of the AMF for the multicast session identified by the TMGI by transmitting a multicast session request message to the MB-SMF. The multicast session request message may include a TMGI.

10) The MB-SMF may transmit a multicast session response message to the AMF. The MB-SMF may include the cell ID list stored for TMGI in the multicast session response message. AMF may store TMGI, cell ID list, and the MB-SMF information for a multicast session.

11) The AMF may transmit a Multicast Join Accept message to the UE. The AMF may include a list of cell IDs stored for TMGI in the Multicast Join Accept message.

Regardless of whether the UE has received information in any format (e.g. List of Cell IDs or geographic area information) as a multicast service area, the UE may use the List of Cell IDs in the Multicast Join Accept message to determine whether the UE is located within a service area for this multicast service.

12) When the AMF does not subscribe to an event related to multicast service area change for TMGI (e.g., when step 9) is performed), the AMF may transmit a Multicast Session Subscribe message to the MB-SMF in order to receive a notification about the change of the multicast service area for the TMGI.

13) When the multicast session is started in step 6), a multicast session setup for the UE may be performed.

For reference, the solutions for MBS session management of 3GPP Technical Report (TR) 23.757 V1.2.0 may also be used for multicast session setup described in the first example of the disclosure of this specification.

14) If the multicast session has not been started, the multicast session may be started in step 14). The AF may provide an updated multicast service area (e.g., cell ID list or geographic area information). In this case, the MB-SMF may perform multicast session start using the updated multicast service area and store the updated multicast service area (e.g., cell ID list).

For reference, the contents described in the first example of the disclosure of the present specification may also be used for multicast session initiation.

15) When the multicast service area is changed, the MB-SMF may transmit a Multicast Session Notify message to the AMF to provide an updated cell ID list for TMGI.

The MB-SMF may provide the updated List of Cell IDs to all AMFs subscribed to the multicast service area change event.

16) When the AMF receives the updated cell ID list for TMGI from MB-SMF in step 15), the AMF may provide the UE with an updated cell ID list for TMGI. For example, the AMF may send a multicast update command message including an updated cell ID list for TMGI to the UE. The UE may use the cell ID list provided from the AMF to determine whether the UE is in a service area for this multicast service.

The LTE may determine whether the LTE is located in the service area of the MB session based on the updated List of Cell IDs received from the AMF. In this case, the UE is located in the service area of the MB session, and the LTE does not perform a join request for the MB session, the UE may transmit a Join request message to the AMF. If the UE is not located within the service area of the MB Session, after the UE successfully performs Join for the MB Session, the UE may transmit a Leave request message to the AMF.

For example, after the UE has already successfully joined the MB session (ie, multicast service identified by TMGI), as the UE determined based on updated List of Cell IDs, if the UE is not located in the service area of the MB session, the UE may transmit a Leave request message to the AMF. In other words, if the LTE has already successfully joined the MB session (that is, multicast service identified by TMGI), but the UE is no longer located in the service area of the MB session according to the updated List of Cell IDs, the UE may transmit a Leave request to the AMF. For another example, the UE has not performed a Join request because it is not located within the service area of the MB session, as the UE determined based on the updated List of Cell IDs, when the LTE is located in the service area of the MB session, the LTE may transmit a Join request to the AMF.

In step 6) or step 14), if an AF changes the multicast service area, the AF may provide an updated multicast service area by performing multicast service announcement to the UE. On the other hand, regardless of whether the UE has received information in any format (e.g. List of Cell IDs or geographic area information) from the AF to the multicast service area, the MB-SMF may notify the AMF of this multicast service area information change so that the UE can obtain the accurate multicast service area information. Then, the AMF may notify the LTE of this multicast service area information change.

For reference, in the example of FIG. 6, step 9) may include step 12). In other words, step 12) may not be performed, and step 9) may be an operation including step 12).

In the example with reference to FIG. 6 , with respect to the multicast service identified by a specific TMGI, it has been described that the UE performs a join request to the AMF, but this is only an example. Unlike described in the example with reference to FIG. 6, the UE may transmit a join request to another Control plane Network Function (NF) (e.g., a SMF, a PCF, an NG-the a RAN, etc.). In other words, the operation of the AMF described in the example of FIG. 6 may be performed by another control plane NF. For example, when the LTE transmits a join request to a control plane Core NF other than the AMF, the LTE may transmit a join request to another Control plane Core NF through the AMF. Alternatively, the UE may transmit a join request to the UPF through the user plane. In this case, the UPF may pass the join request to the SMF, and the SMF may process the join request.

### 2. Second example of the disclosure of the present specification

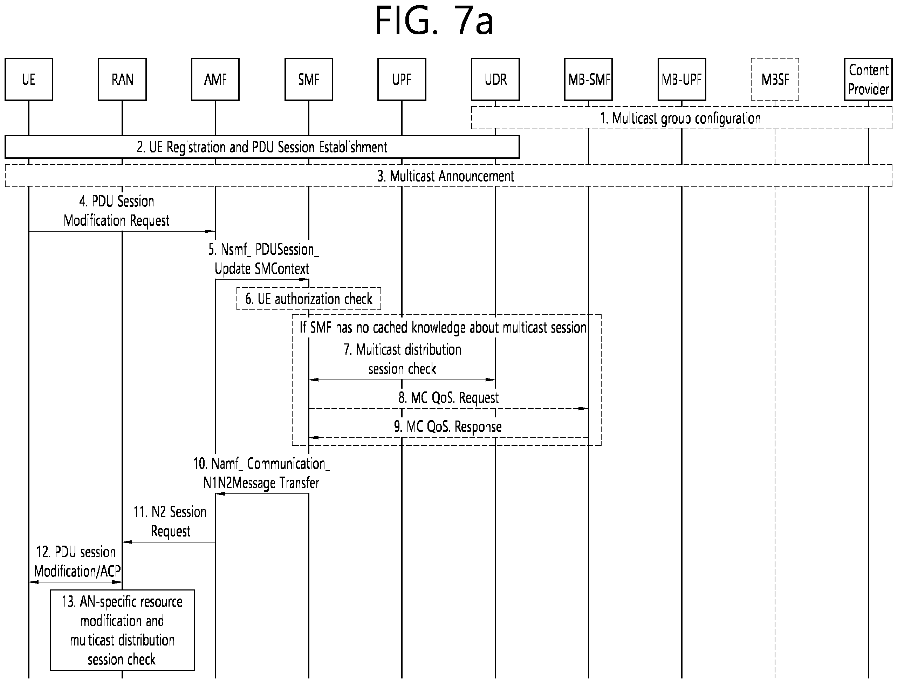

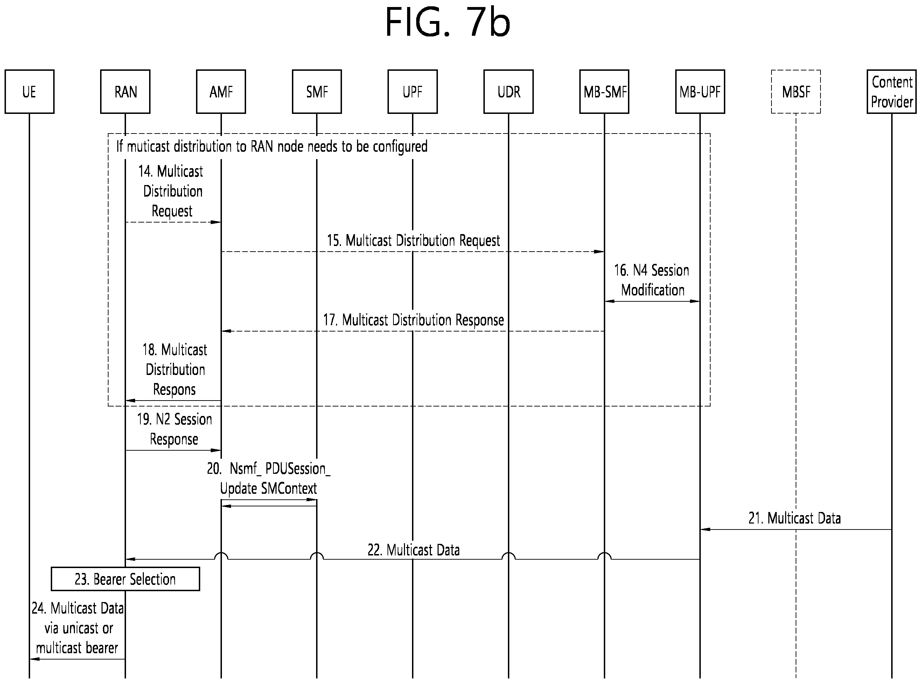

Hereinafter, a second example of the disclosure of the present specification will be described with reference to the examples of FIGS. 7a and 7b.

In the second example of the disclosure of the present specification, an example of a procedure in which the SMF and the LTE process a Join request for multicast communication will be described.

The following drawings were created to explain a specific example of the present specification. Since the names of specific devices described in the drawings or the names of specific signals/messages/fields are presented by way of example, the technical features of the present specification are not limited to the specific names used in the following drawings.

**FIGS. 7a** **and** **7b** **show an example of a signal flow diagram according to a second example of the disclosure of the present specification.**

FIGS. 7a and 7b are an example of a PDU session modification procedure for multicast. FIGS. 7a and 7b are based on the example of the PDU session modification procedure for multicast of Section 8.2.3 of 3GPP Technical Report (TR) 23.757 v1.2.0. In the second example of the disclosure of the present specification, based on the contents of section 8.2.3 of 3GPP TR 23.757 v1.2.0, unlike Section 8.2.3 of 23.757 v1.2.0, the contents proposed in the second example of the disclosure of the present specification will be mainly described. Specifically, after first explaining the contents of section 8.2.3 of 3GPP TR 23.757 v1.2.0, examples of step 4), step 7), A) operation, B) operation, etc. suggested in the second example of the disclosure of the present specification will be described.

First, the contents of section 8.2.3 of 3GPP TR 23.757 v1.2.0 will be described first.
1) The content provider may transmit a request to register and reserve a resource for a multicast group to the NEF. In addition, the content provider may perform communication related to the related multicast address.

The content provider can provide multicast information by calling the service provided by the NEF. Multicast information can be used to identify and reserve resources for multicast (e.g., IP address of multicast data). The NEF may select the MB-SMF that controls the MB-UPF serving as an ingress point for multicast data, create a multicast context, and store related information including the SMF ID in the UDR. The MB-SMF may request an MB-UPF to allocate IP address and port for ingress multicast traffic, which may be provided to content provider through an NEF.

For reference, in the disclosure of the present specification, a SMF and an MB-SMF may be the same.

2) The LTE may register with the PLMN and request establishment (or establishment) of a PDU session. The UE may also indicate the ability to receive multicast data over the air. The AMF may obtain information on whether the UE can participate in the multicast session from the UDM as part of the SMF Selection Subscription data. If the UE can join a multicast session, for direct discovery, based on locally configured data or the corresponding SMF function stored in NRF, the AMF may select an SMF capable of handling the multicast session, and may indicate to the SMF the capability of the UE to receive multicast data over the air.

3) A content provider can announce the availability of multicast using a higher layer (e.g., an application layer). The announcement may include the multicast address of a multicast group that the LTE can join.

4) In order to participate in the multicast group, the LTE may transmit a PDU session modification request message or a PDU session establishment request message. For example, due to the request of higher layers or detection(e.g. detection of an IGMP or Multicast Listener Report (MLR) and changing the content of an IGMP or MLR message) by the lower layer of the UE participating in the multicast group, the UE may transmit a PDU session modification request message or a PDU session establishment request message. The PDU session modification requests, like multicast addresses listed in IGMP and MLR messages, may include information on a multicast group that the UE wants to join. This information may be needed to set up the UPF with an appropriate packet filter.

5) The AMF may invoke Nsmf_PDUSession_UpdateSMContext (SM context ID, N1 SM container (including PDU session modification request with multicast information)).

6) The SMF may check whether the LTE is authorized to join the multicast session (LTE is authorized to join the multicast session). The SMF may interact with a PCF, an UDR or an NEF for this purpose.

7) If the SMF does not have information about the multicast context for the indicated multicast group, the SMF may check whether a multicast context for a multicast group (address) exists in the system from the UDR. If the multicast context for the multicast group does not exist, the SMF may generate the context when the first UE joins the multicast group, and store the multicast context including the SMF itself as the multicast control SMF in the UDR. And, the SMF may set the UPF to handle multicast data distribution. In this case, the SMF and the MB-SMF, and the UPF and the MB-UPF may be the same, respectively. If the LTE in the example of FIGS. 7a and 7b is the first LTE to join the multicast group, the MB-UPF may join the multicast tree towards the content provider. The MB-SMF may request that the MB-UPF participate in the multicast tree when configuring the MB-UPF (see, for example, step 15) and step 26)). If the multicast context already exists in the UDR, the SMF may retrieve related information including MB-SMF related information for controlling a multicast ingress point from the UDR.

8-9) If the SMF does not have information about the multicast context for the indicated multicast group, the SMF may interact with MB-SMF to retrieve QoS information of multicast QoS flow(s).

10) The SMF may request the AMF to transmit a message to the RAN node using the Namf_N1N2MessageTransfer service (N2 SM information (including PDU session ID, Multicast Context ID, MB-SMF ID, multicast QoS Flow information), N1 SM container (including PDU session modification command)). The PDU session modification command may include a PDU session ID and multicast information(multicast context ID, multicast QoS flow information, multicast address). The SMF may perform an operation requesting the AMF for purposes such as the following examples:
- To create a multicast context in the RAN if the multicast context does not yet exist; and
- To inform the relationship between the multicast context and the PDU session of the UE.

Based on the operator policy, if the SMF is configured to prepare for unicast fall-back, the SMF may map the received QoS information of the multicast QoS flow to the unicast QoS flow information of the PDU session. In addition, the SMF may include information on the unicast QoS flow and information on the correlation between the unicast QoS flow and the multicast QoS flow in the N2 SM information. When dedicated unicast QoS flows are required, N2 SM information may include information on dedicated unicast QoS flows. In the SMF, information on unicast QoS flow may also be included in the N1 SM container.

11) The AMF may transmit an N2 session request message to the RAN. For example, the AMF may send an N2 session modification request to the RAN. The N2 session modification request may be transmitted in the UE context using a PDU session resource modification request message enhanced with multicast-related information. The multicast-related information may include a multicast group ID (e.g., a multicast address), a multicast session context ID and a multicast QoS flow ID, and associated QoS information. The RAN may use the multicast group ID to determine whether the session modification procedure corresponds to one multicast group. That is, the RAN may recognize the LTE receiving the same multicast data from the multicast group ID. When the RAN receives a session modification request for a previously unknown multicast group ID, the RAN may set up resources to provide this multicast group.

12) N1 SM container (including PDU Session Modification Command) may be provided to the UE.

13) The RAN may perform necessary access network resource modifications, such as configuration of point-to-point (PTP) or point-to-multipoint (PTM) bearers. The RAN node may check whether a user plane for multicast group/context distribution has already been established toward the RAN node. If the RAN supports MBS, the RAN may configure the UE to receive multicast data through a multicast session.

14) The RAN node may select an AMF to communicate with the MB-SMF and transmit a request for the AMF (e.g., including MB-SMF ID and multicast context/group ID). If the RAN node is set to use unicast transmission for multicast distribution sessions, the RAN node allocates a downlink tunnel ID (IP address and GPRS Tunnelling Protocol User Plane (GTP-U) Tunnel Endpoint Identifier (TEID)) for multicast distribution session reception, the RAN node may indicate the downlink tunnel information in the request to the AMF.

15) The AMF may deliver a multicast distribution request message to the MB-SMF.

16) For unicast transmission of multicast distribution session, the MB-SMF may set the MB-UPF to transmit multicast distribution session to the RAN (e.g. by using received IP address and GTP-U TEID).

17) The MB-SMF may send a multicast distribution session response to the AMF. For multicast transmission of multicast distribution, the MB-SMF may indicate the transport multicast address for the multicast session in downlink tunnel information.

18) The AMF may deliver a multicast distribution session response to the RAN node.

19) The RAN may transmit a session modification response message not including unicast tunnel information to the AMF.

20) The AMF may transmit the session modification response received in step 18) to the SMF. The SMF may decide that the shared tunnel is used for multicast packet transmission and no interaction with the UPF is required.

21) The MB-UPF may receive multicast data (e.g. PDUs) either directly from a content provider or through MBSF-U that can control data.

22) The MB-UPF may transmit a multicast PDU of an N3/N9 tunnel related to a multicast distribution session to the RAN. There can be only one tunnel per multicast distribution session and RAN node. That is, all connected PDU sessions can share this tunnel.

23) The RAN may select a PTM radio bearer or a PTP radio bearer to deliver a multicast PDU to a LTE that has joined the multicast group.

24) The RAN may perform transmission using the selected bearer.

Multicast group configuration in SGC may occur in the following example:
- when the first LTE joins a multicast group;
- based on static composition;
- based on that the configuration being triggered by an AF request via NEF.

In the service layer, the Multicast Service Function (MSF) manages the MBS service and can set up a multicast group by applying related NEF procedures.

The following is an example of the operation proposed in the second example of the disclosure of the present specification.

4) In order to participate in the multicast group, the LTE may transmit a PDU session modification request message or a PDU session establishment request message. For example, due to the request of higher layers or detection (e.g. detection of an IGMP or Multicast Listener Report (MLR) and changing the content of an IGMP or MLR message) by the lower layer of the UE participating in the multicast group, the UE may transmit a PDU session modification request message or a PDU session establishment request message. The PDU session modification request message may include information (such as multicast addresses listed in IGMP and MLR messages) on a multicast group that the UE wants to join. Information about the multicast group may be needed to set up a UPF with an appropriate packet filter.

7) If the SMF does not have information related to the multicast context for the indicated multicast group, the SMF can check with the UDR whether a multicast context for a multicast group (address) exists in the system. If the multicast context for the multicast group does not exist in the UDR, the SMF may generate a multicast context when the first UE joins a multicast group. And, the SMF can store the multicast context including itself (SMF) as the multicast controlling SMF in the UDR. And, the SMF may set the UPF so that the UPF handles multicast data distribution (a SMF and a MB-SMF, an UPF and a MB-UPF may be the same in FIGS. 7a and 7b). If the UE of the example of FIGS. 7a and 7a is the first UE to join a multicast group, the MB-UPF may join the multicast tree towards the content provider. For example, when the MB-SMF configures the MB-UPF, the MB-SMF may request the MB-UPF to join the multicast tree (e.g., see steps 15 and 26). If the multicast context already exists in the UDR, the SMF may retrieve related information including information related to the MB-SMF that controls the multicast ingress point from the UDR.
A) In step 4), the UE may have transmitted a PDU Session Establishment Request message including information requesting Join for one or more multicast sessions. In this case, if the multicast session(s) requested to join corresponds to the local multicast service, the SMF may perform the following operations:
   A-i) For the multicast session(s) requested to join, the SMF may check whether the UE is located in the service area of each multicast session. As a result of the SMF check, for all multicast session(s), if the UE is not located within the service area of each multicast session, the SMF may decide to reject the Join request for all multicast session(s). As a result of the SMF check, for all multicast session(s), if the UE is located within the service area of each multicast session, the SMF may decide to accept the Join request for all multicast session(s). If the SMF accepts the Join request, the SMF may send a PDU Session Establishment Accept message to the UE. At this time, if the SMF does not have the service area information of the multicast session requested by the UE, the SMF may perform an operation to retrieve service area information from an NF (e.g., an UDR, an UDM, a MB-SMF, a NRF, etc.) storing service area information of a multicast session. When the SMF decides to reject (e.g., when SMF decides to reject Join request for all multicast session(s)), the SMF may perform the determination and/or action of one of the following examples:
      A-i-1) The SMF may decide to reject the PDU Session establishment (or establishment) request. Accordingly, the SMF may transmit a PDU Session Establishment Reject message to the UE. The PDU Session Establishment Reject message may include service area information (e.g., Cell ID list and/or TAI list) of the multicast session for which the Join request is rejected. The SMF may include information (e.g. the LTE is outside the service area) related to the indication/list and/or reason indicating that the SMF rejects the Join request for the multicast session requested by the UE in the PDU Session Establishment Reject message. The SMF may include information(e.g., joining multicast session(s) is impossible/rejected) related to the reason why the PDU Session creation (or establishment) was rejected for the PDU Session itself in the PDU Session Establishment Reject message.
      A-i-2) The SMF may determine to allow the PDU Session establishment (or establishment) request. Accordingly, the SMF may transmit a PDU Session Establishment Accept message to the UE. The PDU Session Establishment Accept message may include service area information (e.g., Cell ID list and/or TAI list) of the multicast session for which the Join request is rejected. For the multicast session requested by the LTE to join, the SMF may include an indication/list indicating that the SMF rejects the Join request and/or information related to the reason (e.g., the UE is outside the service area) in the PDU Session Establishment Accept message.
         After the SMF performs the operation of A-i-1) or A-i-2) described above, a service area change may occur for multicast session that rejects join request. In this case, the SMF may provide or notify the UE of information related to the change of the service area for the multicast session in which the Join request is rejected. The operation of the SMF providing or notifying the UE of information related to the service area change may be performed even though the LTE has not performed a Join request because the LTE has not yet entered the service area of the corresponding multicast session. Even though the LTE did not perform a Join request, in order for the SMF to provide or notify the UE with information related to the service area change for the multicast session for which the SMF rejects the Join request, the SMF may store information about a LTE that has requested Join for a multicast session but has been rejected. Even if there is no LTE that has succeeded/allowed Join for the multicast session, the SMF may store service area information of a multicast session and information of a UE whose Join request is rejected. In addition, the SMF may perform an operation (e.g., subscription to a notification service) to be notified when a service area change occurs from the NF (e.g. a UDR, a UDM, an MB-SMF, an NRF, etc.) storing the service area information of the multicast session. Information such as the above example stored by SMF may be stored as part of the multicast session context or may be stored in a separate context format.
   A-ii) For the multicast session(s) requested to join, the SMF may check whether the UE is located in the service area of each multicast session. As a result of the SMF check, if the UE is not located within the service area of the multicast session(s) for some multicast session(s), the SMF may determine that the LTE rejects the Join request for some multicast session(s) that are not within the service area. At this time, if the SMF does not have the service area information of the multicast session requested by the UE, the SMF may perform an operation to retrieve service area information from an NF (e.g., a UDR, a UDM, an MB-SMF, an NRF, etc.) storing service area information of a multicast session. In this case (e.g., when the SMF decides to reject the Join request for some multicast session(s) that the UE is not within the service area), the SMF may perform the determination and/or action of one of the following examples:
      A-ii-1) The SMF may decide to allow the PDU Session establishment (or establishment) request. Accordingly, the SMF may transmit a PDU Session Establishment Accept message to the UE. The PDU Session Establishment Accept message may include service area information (e.g., Cell ID list and/or TAI list) of some multicast sessions for which the Join request is rejected. For some multicast sessions requested by the LTE to join, the SMF may include an indication/list indicating that the SMF rejects the Join request and/or information(e.g. the UE is outside the service area) related to the reason in the PDU Session Establishment Accept message.
      After the SMF performs the operation of A-ii-1) described above, a service area change may occur for multicast session that rejects join request. In this case, the SMF may provide or notify the UE of information related to the change of the service area for the multicast session in which the Join request is rejected. The operation of the SMF providing or notifying the LTE of information related to the service area change may be performed even though the LTE has not performed a Join request because the LTE has not yet entered the service area of the corresponding multicast session. Even though the LTE did not perform a Join request, in order for the SMF to provide or notify the UE with information related to the service area change for the multicast session for which the SMF rejects the Join request, the SMF may store information about a LTE that has requested Join for a multicast session but has been rejected. Even if there is no LTE that has succeeded/allowed Join for the multicast session, the SMF may store service area information of a multicast session and information of a UE whose Join request is rejected. In addition, the SMF may perform an operation (e.g., subscription to a notification service) to be notified when a service area change occurs from the NF (e.g. a UDR, a UDM, an MB-SMF, an NRF, etc.) storing the service area information of the multicast session. Information such as the above example stored by SMF may be stored as part of the multicast session context or may be stored in a separate context format.
B) In step 4), the UE may have transmitted a PDU Session Modification Request message including information requesting Join for one or more multicast sessions. In this case, if the multicast session(s) requested to join corresponds to the local multicast service, SMF may perform the following:
   B-i) For the multicast session(s) requested to join, the SMF may check whether the UE is located in the service area of each multicast session. As a result of the SMF check, for all multicast session(s), if the UE is not located within the service area of each multicast session, the SMF may decide to reject the Join request for all multicast session(s). As a result of the SMF check, for all multicast session(s), if the UE is located within the service area of each multicast session, the SMF may decide to accept the Join request for all multicast session(s). If the SMF accepts the Join request, the SMF may send a PDU Session Modification Command message to the UE. At this time, if the SMF does not have the service area information of the multicast session requested by the UE, the SMF may perform an operation to retrieve service area information from an NF (e.g., an UDR, an UDM, a MB-SMF, a NRF, etc.) storing service area information of a multicast session. When the SMF decides to reject (e.g., when SMF decides to reject Join request for all multicast session(s)), the SMF may perform the determination and/or action of one of the following examples:
      B-i-1) The SMF may decide to reject the PDU Session Modification request. Accordingly, the SMF may transmit a PDU Session Modification Reject message to the UE. The PDU Session Modification Reject message may include service area information (e.g., Cell ID list and/or TAI list) of the multicast session for which the Join request is rejected. The SMF may include information (e.g. the LTE is outside the service area) related to the indication/list and/or reason indicating that the SMF rejects the Join request for the multicast session requested by the UE in the PDU Session Modification Reject message. The SMF may include information(e.g., joining multicast session(s) is impossible/rejected) related to the reason why the PDU Session Modification was rejected for the PDU Session itself in the PDU Session Modification Reject message.
      B-i-2) The SMF may determine to allow the PDU Session Modification request. Accordingly, the SMF may transmit a PDU Session Modification Command message to the UE. The PDU Session Modification Command message may include service area information (e.g., Cell ID list and/or TAI list) of the multicast session for which the Join request is rejected. For the multicast session requested by the LTE to join, the SMF may include an indication/list indicating that the SMF rejects the Join request and/or information related to the reason (e.g., the UE is outside the service area) in the PDU Session Modification Command message.
         After the SMF performs the operation of B-i-1) or B-i-2) described above, a service area change may occur for multicast session that rejects join request. In this case, the SMF may provide or notify the UE of information related to the change of the service area for the multicast session in which the Join request is rejected. The operation of the SMF providing or notifying the UE of information related to the service area change may be performed even though the LTE has not performed a Join request because the LTE has not yet entered the service area of the corresponding multicast session. Even though the LTE did not perform a Join request, in order for the SMF to provide or notify the UE with information related to the service area change for the multicast session for which the SMF rejects the Join request, the SMF may store information about a LTE that has requested Join for a multicast session but has been rejected. Even if there is no LTE that has succeeded/allowed Join for the multicast session, the SMF may store service area information of a multicast session and information of a UE whose Join request is rejected. In addition, the SMF may perform an operation (e.g., subscription to a notification service) to be notified when a service area change occurs from the NF (e.g. a UDR, a UDM, an MB-SMF, an NRF, etc.) storing the service area information of the multicast session. Information such as the above example stored by SMF may be stored as part of the multicast session context or may be stored in a separate context format.
   B-ii) For the multicast session(s) requested to join, the SMF may check whether the UE is located in the service area of each multicast session. As a result of the SMF check, if the UE is not located within the service area of the multicast session(s) for some multicast session(s), the SMF may determine that the LTE rejects the Join request for some multicast session(s) that are not within the service area. At this time, if the SMF does not have the service area information of the multicast session requested by the UE, the SMF may perform an operation to retrieve service area information from an NF (e.g., a UDR, a UDM, an MB-SMF, an NRF, etc.) storing service area information of a multicast session. In this case (e.g., when the SMF decides to reject the Join request for some multicast session(s) that the UE is not within the service area), the SMF may perform the determination and/or action of one of the following examples:
      B-ii-1) The SMF may decide to allow the PDU Session Modification request. Accordingly, the SMF may transmit a PDU Session Modification Command message to the UE. The PDU Session Modification Command message may include service area information (e.g., Cell ID list and/or TAI list) of some multicast sessions for which the Join request is rejected. For some multicast sessions requested by the LTE to join, the SMF may include an indication/list indicating that the SMF rejects the Join request and/or information(e.g. the UE is outside the service area) related to the reason in the PDU Session Modification Command message.

In the second example of the disclosure of the present specification, the SMF may obtain service area information of the multicast session from the NF (e.g., an UDR, an UDM, a MB-SMF, a NRF, etc.) storing the service area information of the multicast session. When this NF is not the MB-SMF, the NF storing service area information of the multicast session may be an NF storing the MB-SMF information serving the multicast session. In addition, the SMF may be notified of the service area change information when the service area change occurs from the NF storing the service area information of the multicast session. For example, when a service area change occurs, the SMF may subscribe to a service area change notification service (a notification service provided by an NF storing service area information of the multicast session). By subscribing to the notification service by the SMF, the SMF can be notified of the service area change when the service area change occurs.

In steps A) and B) described above, an example in which the SMF rejects a Join request has been described, but this is only an example. If the UE is located within the service area of the multicast session, the SMF may accept the Join request. When the SMF accepts the Join request, the SMF may transmit a NAS SM message for a multicast session in which the Join request is successful/allowed to the LTE. When the SMF sends a NAS SM message to the LTE for a multicast session where the Join request is successful/allowed, the SMF may include service area information (Cell ID list and/or TAI list) of the multicast session in the NAS SM message. In addition, the SMF may include information indicating that the Join request was successful/allowed in the NAS SM message.

As described in the various examples above, even if there is no LTE where Join is successful/allowed for the multicast session, the SMF may store service area information of a multicast session and information of a UE whose Join request is rejected. In addition, the SMF may perform an operation(e.g. subscribing to a notification service) to be notified when a service area change occurs from the NF (e.g. UDR, UDM, MB-SMF, NRF, etc.) storing the service area information of the multicast session. In this case, the SMF may use a timer to manage stored information and/or notifications from other NFs. For example, the SMF may start (or drive) a timer (e.g., a timer based on local configuration) when storing service area information of a multicast session and information of a UE whose Join request is rejected. And, until the timer expires, if there is no Join request from any UE for this multicast session, the SMF may delete the stored information(e.g., service area information of a multicast session and/or information of a UE whose Join request is rejected). Also, until the timer expires, if there is no Join request from any UE for this multicast session, the SMF may stop receiving notification(e.g., to be notified of information related to service area changes) of service area information update of multicast session along with the operation of deleting information. For example, the SMF may release subscription to the notification service in order to stop receiving notification of service area information update of the multicast session. When the SMF receives a Join request from a certain UE for the multicast session and the SMF accepts the Join, the SMF may stop the initiated timer. When the SMF receives a Join request from a certain LTE for the multicast session and the SMF rejects the Join request, the SMF may restart (e.g., restart) the timer.

In the second example of the disclosure of the present specification, in order for the SMF to transmit the updated service area information to the UE, the SMF may remember (or store) the service area information transmitted to each UE. When the UE requests Join for the multicast session, the UE may transmit service area information and/or version information of service area information of the multicast session that the UE has to the SMF. The SMF may determine whether the SMF transmits new (e.g., updated) service area information to the UE based on the service area information of the multicast session and/or the version information of the service area information received from the UE. If the UE does not transmit any information to the SMF regarding the service area of the multicast session, the SMF may determine that the UE does not have service area information.

### 3. Third example of the disclosure of the present specification

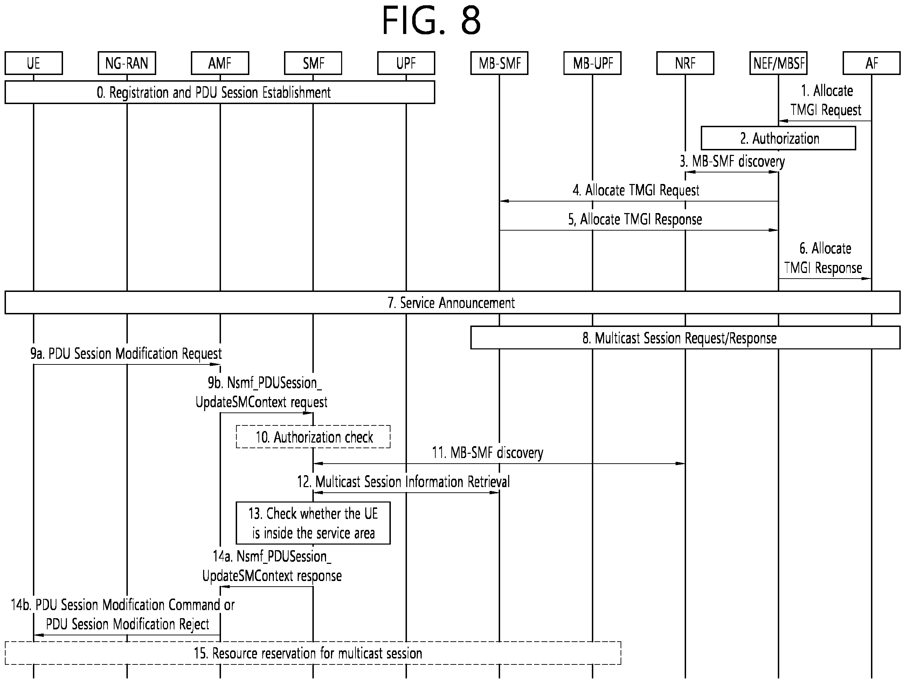

Hereinafter, a third example of the disclosure of the present specification will be described with reference to the example of FIG. 8 .

In a third example of the disclosure of the present specification, an example of a procedure in which the SMF and the UE process a Join request for multicast communication will be described.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 8** **shows an example of a signal flow diagram according to a third example of the disclosure of the present specification.**

The example of FIG. 8 describes an example of a procedure in which the SMF processes a join request related to multicast.

For reference, before describing the example of FIG. 8 , in the third example of the disclosure of the present specification, in relation to the multicast service area, the following may be considered:
a) Information related to the multicast service area, such as Cell ID list, Tracking Area ID (TAI) list, geographic area information, civic address information, etc., may be provided by a third party content provider (or AF).
b) Cell ID list and TAI list may be used by core network functions (e.g., an Multicast-Broadcast Service Function (MBSF), an MB-SMF, a SMF, etc.). If a third-party content provider (or AF) provides geographic area information or civic address information as a target service area, the NEF, the MBSF or the MB-SMF may convert this service area (e.g., geographic area information or civic address information) into a Cell ID list and/or a TAI list.
c) Third party content provider (or AF) may provide a Cell ID list, a TAI list, geographic area information, civic address information, etc. to UE through MBS service announcement.

Hereinafter, a procedure in which the SMF processes a Join request will be described in detail with reference to the example of FIG. 8.

In the example of FIG. 8, service area, multicast service area, MBS service area, and local service area are used interchangeably.

0) UE may perform a registration procedure and PDU session establishment (or creation) (PDU Session Establishment) procedure. In the example of FIG. 8, step 0) is shown to be performed before step 1), but this is only an example. In the disclosure of this specification, step 0) may be performed at any time before step 7) is performed.

1) The AF may transmit an Allocate TMGI Request message to an NEF/MBSF to request allocation of TMGI for multicast service (or multicast session).

The AF may include information on a multicast service area in the Allocate TMGI request message. Information on the multicast service area may be, for example, one or more of a Cell ID list, a TAI list, geographical area information, and civic address information.

Among the multicast service area information described above, the Cell ID list and the TAI list can be used by the AF only when the AF is located in the trust domain (e.g. networks trusted by 5GS, such as 3GPP-based networks) and the AF knows about the Cell or the tracking area. That is, not all AF and/or Content Providers have knowledge of a cell or tracking area of a mobile communication network (ie, a mobile communication network operated by an operator). In other words, the Cell ID list and the TAI list can be referred to as location information in the form of 3GPP location used in the 3GPP mobile communication network. And, geographical area information and civic address information may be referred to as non-3GPP location type location information. AF and/or Content Provider provide location information in the form of 3GPP location (e.g. Cell ID list and/or TAI list) only in limited cases (e.g. AF is located in trust domain and AF knows about Cell or tracking area). ) can be used, in other cases, the AF and/or Content Provider may use non-3GPP location type location information (e.g., geographical area information and civic address information).

2) The NEF/MBSF may perform authorization check for AF's request (e.g., the Allocate TMGI Request message).

3) The NEF/MBSF may discover the MB-SMF through NRF (e.g., through communication with NRF) and select MB-SMF. Alternatively, the NEF/MBSF may search for the MB-SMF based on local configuration and select MB-SMF.

4) The NEF/MBSF may transmit an Allocate TMGI Request message to the MB-SMF.

In step 1), if the multicast service area information provided by the AF to the NEF / MBSF is geographical area information or civic address information, the NEF / MBSF may translate or convert geographical area information or civic address information to Cell ID list and / or TAI list. In addition, the NEF/MBSF may include the translated or converted Cell ID list and/or the TAI list in the Allocate TMGI Request message transmitted to the MB-SMF. For reference, the translated or converted Cell ID list and/or TAI list may be referred to as multicast service area information or Location Criteria information. The multicast service area information or Location Criteria information transmitted to the MB-SMF may include one or more of the Cell ID list and the TAI list. Alternatively, translating or converting geographical area information or civic address information to the Cell ID list and/or the TAI list may be performed by the MB-SMF rather than the NEF/MBSF.

5) The MB-SMF may allocate TMGI. And, the MB-SMF may transmit the allocated TMGI to the NEF/MBSF. For example, the MB-SMF may transmit an Allocate TMGI response message including the allocated TMGI to the NEF/MBSF.

When multicast service area information (or Location Criteria information) is included in the TMGI allocation request message (Allocate TMGI Request message), the MB-SMF may store multicast service area information (or Location Criteria information) together with TMGI to which it is allocated.

6) The NEF/MBSF may transmit TMGI received from MB-SMF to AF. For example, the NEF/MBSF may transmit an Allocate TMGI response message including the TMGI to the AF.

7) The AF may perform Service Announcement for the UE. The Service Announcement may be performed through application layer signaling, the AF may provide MBS Session related information (e.g., an MBS Session ID such as TMGI, an MBS service area (or multicast service area) information, whether the MBS service is a local service, service/session description information, whether the MBS service is multicast or broadcast, QoS-related information, etc.) ) to the UE.

With respect to MBS service area (or multicast service area) information provided by the AF to the UE, the contents of the multicast service area information described in step 1) may be applied mutatis mutandis.

The LTE may provide location information of the LTE (e.g., various types of location information such as a Cell ID, a TAI, a geo-coordinates, etc.) to the AF. And, based on the location information of the LTE, the AF may provide the service-related information (e.g., MBS Session-related information of various examples described above) for the local multicast service (or multicast session) to the UE. An operation in which the UE provides location information of the UE to the AF and an operation of the AF providing the service-related information(e.g., MBS Session-related information in the various examples described above) for the local multicast service (or multicast session) to the UE based on the location information of the UE, may be applied samely throughout the disclosure of this specification.

8) The AF may perform multicast session request operation (e.g., multicast session request and/or response operation) together with 5G Core Network (e.g., the MB-SMF, the MB-UPF, the NRF, the NEF/MBSF). The multicast session request operation may be interpreted as multicast session start, multicast session activation, multicast session initiation, and the like. The multicast session request operation may cause the MB-SMF to select an MB-UPF for multicast session and reserve/allocate user plane resources required for multicast session.

The AF may transmit a multicast session request message including Quality of Service (QoS) requirements, the LTE authorization information(e.g., a list of LTEs allowed to join a multicast service (or multicast session)), multicast service area information, etc. to the 5G Core Network when performing a multicast session request operation.

For the description of the multicast service area information, the contents related to the multicast service area information described in steps 1) and 4) may be applied in a same manner.

The MB-SMF may store information about multicast session.

9) The LTE may transmit a Join request to the SMF to join the multicast service (or multicast session) of interest. The Join request may be included in an SM NAS message (a PDU Session Modification Request message, a PDU Session Establishment Request message, etc.) and transmitted to the SMF. For example, in step 9a), when the LTE transmits a PDU Session Modification Request message including a Join request to the AMF, in step 9b), the AMF may transmit an Nsmf_PDUSession_UpdateSMContext request message including a Join request to the SMF. In order to identify/indicate the multicast service (or multicast session) to which the Join request is made, the Join request may include a TMGI. If the UE determines that the UE itself is within the service area based on the MBS Session-related information (e.g., service area information, whether it is a local service) received from the AF in step 7), the UE may transmit the Join request to the SMF. Based on the MBS Session-related information (e.g., service area information) received from the AF by the UE in step 7), if it is determined that the UE itself is outside the service area, the UE may not transmit a Join request.

The UE may request a join for multiple multicast services (or multicast sessions) instead of one multicast service (or multicast session). An operation in which the LTE requests a join for a plurality of multicast services (or multicast sessions) may be applied throughout the disclosure of this specification.

10) The SMF may perform an authorization check for the Join request transmitted by the UE.

11) If the SMF does not have a context for the multicast session requested by the UE, the SMF can obtain the context for the multicast session requested to join from the MB-SMF. The SMF may discover MB-SMF serving the multicast session through NRF (e.g., through communication with NRF), the SMF may select MB-SMF. Alternatively, the SMF may search for MB-SMF based on local configuration and select MB-SMF.

12) The SMF may obtain information about the multicast session (e.g., information related to the multicast session, such as the context for the multicast session) from the MB-SMF. Information on the multicast session may include a multicast service area (or Location Criteria information) (e.g., Cell ID list and/or TAI list).

Unlike the example described in step 12), the SMF may obtain all of the information on the multicast session or some of the information(e.g. including multicast service area) on the multicast session from NFs (e.g. a UDR, a UDM, an NEF, an MBSF, an NRF, etc.) other than MB-SMF.

13) The SMF may check whether the UE is located within the service area of the multicast session requested by the LTE to join.

The SMF may acquire location information (e.g., Cell ID and/or TAI) of the UE from the AMF. The SMF may check whether the LTE is located in the service area of the multicast session requested by the UE to join, based on the location information of the UE.

14) If the UE is located within the service area of the multicast session requested by the UE to join, the SMF may respond to the UE accepting the UE's Join request. For example, the SMF may transmit a Join Accept message to the UE. Here, the Join accept message may include service area information (e.g., Cell ID list or TAI list).

When the UE is not located within the service area of the multicast session requested by the UE (ie, the UE is outside the service area), the SMF may respond to the UE that the Join request is rejected. For example, the SMF may transmit a Join reject message to the UE. Here, the Join Reject message may include a reject reason (e.g., outside of local service area) and service area information (e.g., Cell ID list or TAI list). Here, outside of local service area may mean that the UE is not located within the service area.

The SMF may transmit a Join accept message or a Join Reject message to the LTE through the AMF. For example, in step 14a), the SMF may transmit an Nsmf_PDUSession_UpdateSMContext response message including a Join accept message or a Join Reject message to the AMF. Then, in step 14b), the AMF may transmit a PDU session modification command message (including a Join accept message) or a PDU session modification rejection message (including a Join Reject message) to the UE.

The MBS service area information provided by the UE from the AF in step 7) may not be 3GPP location type location information(e.g. Cell ID list and/or TAI list), but may be non-3GPP location type location information(e.g. geographical area information or civic address information). In this case, the LTE determines that the UE is in the service area based on the non-3GPP location type location information (e.g., geographical area information or civic address information), the UE may perform a Join request to the SMF. However, from the perspective of 3GPP location type location information (e.g., Cell ID list and/or TAI list), a situation in which the UE is located outside the service area may occur.

The SMF may use the SM NAS messages (e.g. PDU Session Modification Command, PDU Session Modification Reject, etc.) to transmit a Join Accept message or Join Reject message to the UE. For example, the SMF may transmit a PDU Session Modification Command message including Join Accept to the UE, or the SMF may transmit a PDU Session Modification Reject message including a Join Reject to the UE.

The service area information included in a Join Accept or a Join Reject transmitted by the SMF to the UE may be a combination of the Cell ID list and the TAI list.

The UE may receive a Join Reject message from the SMF. In this case, the UE may determine whether the LTE is located in the service area based on service area information (or location criteria information) (e.g., Cell ID list or TAI list) provided when receiving the Join Reject message. If it is determined that the UE is located in the service area, the LTE may transmit a Join request to the SMF. If it is determined that the UE is not located within the service area, the UE may not transmit a Join request to the SMF. The UE compares the cell information or tracking area information transmitted to the UE by the NG-RAN through the SIB with the service area information received from the SMF, the UE may determine whether the UE is within a service area For reference, the reason why the LTE uses cell information or tracking area information received from NG-RAN through SIB is because the UE uses cell information or tracking area information transmitted by NG-RAN in order to know its current location (e.g., a cell and/or tracking area in which the UE is currently located).

15) When the SMF accepts the Join request, the SMF may perform an operation to provide a multicast service (or multicast session) to the UE. For example, the SMF may perform a task of reserving/allocating a user plane resource necessary to transmit multicast session traffic. This may be performed including step 14 (ie, multicast session related information is provided to N2 SM information used by the NG-RAN, and the NG-RAN configures a radio resource with the UE if necessary). That is, when the SMF includes N2 SM information including multicast session related information in the message of step 14, based on this, the NG-RAN may start a task of reserving/allocating a user plane resource necessary to transmit multicast session traffic.

The operation performed by the SMF in the example of FIG. 8 may also be performed by the AMF. Alternatively, some may be performed by the SMF (e.g., exchanging Join-related NAS messages with the UE), and some may be performed by the AMF (checking whether the UE is within the service area of the multicast request for Join).

In the example of FIG. 8 , the NF that checks whether the LTE is within the service area of the multicast requested to join may be an NF different from the SMF. This means that the NF that exchanges Join-related NAS messages with the UE and the NF that checks whether the UE is within the service area of the multicast requested for Join may be different NFs.

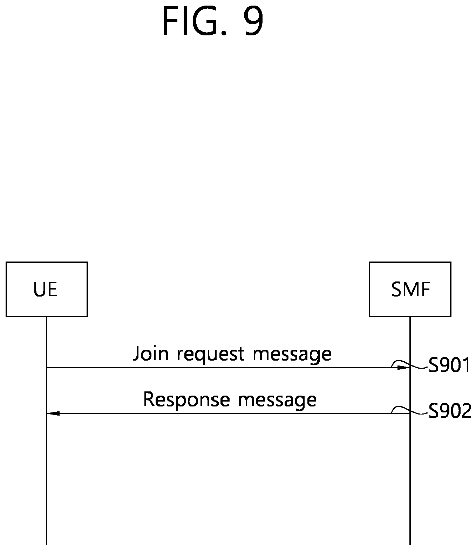

Hereinafter, with reference to the example of FIG. 9, an example of the operation of a network note (e.g., SMF) and an example of the operation of a terminal (e.g., UE) described in the disclosure of the present specification will be described in detail. For reference, the operations described in the example of FIG. 9 below are merely examples, the network node and the terminal may perform not only the operations described in the example of FIG. 9 , but also various operations described above through various examples of the disclosure of the present specification (e.g., the examples of FIG. 6 to FIG. 8 ).

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 9** **shows an example of an operation of a network node and an operation of a terminal according to an embodiment of the disclosure of the present specification.**

In the example of FIG. 9, a UE and a SMF are shown. However, this is only an example, and the UE and the SMF may communicate with various network nodes(e.g. an AMF, an UPF, a MB-SMF, a MB-UPF, a NRF, a NEF, a MBSF, a NEF/MBSF, an AF, etc.) described with reference to FIGS. 6 to 8 , respectively.

In step S901, the UE may transmit a Join request message to the SMF. For example, step S901 may be performed in the same manner as step 8) of FIG. 6 , step 4) of FIGS. 7a and 7b , or step 9a) of FIG. 8 .

Before step S901 is performed, the UE may receive first location information(e.g., geographical area information or civic address information, etc.) for a service area related to the multicast service from the AF. Here, the first location information may be referred to as non-3GPP location type location information. The UE may determine whether the UE is located within a service area based on the first location information. If it is determined that the UE is not located within the service area, the UE may not perform step 5901. If it is determined that the UE is located within the service area, the UE may perform step S901.

In step S902, the SMF may transmit a response message to the UE. The response message may be a response message to the Join request message transmitted by the UE in step S901. Step S902 may be performed in the same manner as, for example, step 11) of FIG. 6, step 12) of FIGS. 7a and 7b, and step 14b) of FIG. 8).

Before performing step S902, after receiving the Join request message, the SMF may determine whether the UE is located in a service area related to the multicast service. For example, the SMF may determine whether the LTE is located in the service area based on location information in the form of 3GPP location related to the service area (e.g., Cell ID list and TAI list, etc.). When it is determined that the UE is located in the service area, the response message of step S902 may be a Join accept message. When it is determined that the UE is not located within the service area, the response message of step S902 may be a Join Reject message.

The response message transmitted by the SMF may include second location information for the service area. Here, the second location information may include location information (e.g., Cell ID list and TAI list, etc.) in the form of 3GPP location related to the service area. The Join Reject message may further include rejection reason information indicating that the LTE is not located within the service area.

When the UE receives a Join rejection message in step S902 or when the location of the UE is changed, the UE is based on the second location information, the UE may determine whether the UE is located within the service area within the service area. If it is determined that the UE is not located within the service area, the UE may not send a Join request message. If it is determined that the UE is located within the service area, the UE may send a Join request message.

In the various examples described in the disclosure of this specification, the NAS message exchanged between the UE and the AMF may be an extension of a conventional message (e.g., a Registration Request message, a Service Request message, etc.), or a newly defined NAS message.

In various examples described in the disclosure of the present specification, a message exchanged between NFs (Network Functions) may be an extension of a conventional message or a newly defined message.

In various examples described in the disclosure of the present specification, the Cell ID information may be interpreted and replaced with Tracking Area Identity (TAI) information, it may be interpreted and replaced with MBS SAI (Service Area Identity) information, it may be interpreted and replaced with gNB information or NG-RAN information. In other words, in various examples described in the disclosure of this specification, TAI information, MBS SAI information, gNB information, or NG-RAN information may be used in the same meaning as Cell ID information. Alternatively, in various examples described in the disclosure of this specification, the Cell ID information may be interpreted as one or more of Cell ID information, TAI information, MBS SAI information, and gNB/NG-RAN information. The MBS SA may be an area mapped to one or more cells or one or more tracking areas.

In various examples described in the disclosure of the present specification, geographic area information may be information for indicating various types of geographic areas. For example, the geographic area information may be a collection of coordinate values, real address information, area information, and the like.

In various examples described in the disclosure of the present specification, an MB-SMF has been described as an example of an NF for storing/managing service area information corresponding to a TMGI or service area information for multicast session. However, this is only an example, and an MB-SMF and other NFs may store/manage service area information corresponding to a TMGI or service area information for a multicast session. For example, an MB-SMF and other NFs store service area information corresponding to a TMGI or service area information for a multicast session, an NF different from an MB-SMF may provide service area information to an NF (e.g., AMF, SMF, PCF, etc.) or a LTE requesting service area information. For example, an NF such as a SMF or an MBSF may store/manage service area information corresponding to TMGI or service area information for a multicast session. An NF that stores/manages service area information corresponding to a TMGI or service area information for a multicast session may be regarded as an NF that manages a multicast session.

In various examples described in the disclosure of this specification, it has been described that the LTE receives multicast service related information including a TMGI from an AF, but this is only an example. In the various examples described in the disclosure of this specification, a UE may receive multicast service related information including a TMGI from an NF other than an AF, a multicast service related information including a TMGI may be configured in the UE.

In the various examples described in the disclosure of this specification, if the service area for multicast service/session (or TMGI) is changed, an AF may notify an MB-SMF of change of service area through an NEF. This may be irrelevant to the session start/activate operation. For example, regardless of whether a session start/activate action has been performed, an AF may notify the MB-SMF of change of service area through the NEF.

In the various examples described in the disclosure of this specification, an NF that stores/manages service area information corresponding to a TMGI or a service area for a multicast session may be an NF that is requested to provide a multicast service area from the UE. In this case, the NF storing/managing service area information corresponding to the TMGI or the service area for the multicast session may provide the UE with the latest multicast service area stored therein.

In various examples described in the disclosure of this specification, the AF transmits a message to another NF (e.g., MBSF (MBS Function), etc.) instead of the NEF, or the AF may receive a message from another NF (e.g., MBSF (MBS Function), etc.). In addition, the NEF may include a function (e.g., MBSF) having a function for the MBS like NEF/MBSF shown in the example of FIG. 8 or may be co-located with such a function.

In various examples described in the disclosure of this specification, TMGI has been described as an example of an identifier for identifying MBS service/session (multicast service/session or broadcast service/session). However, this is only an example, and in the disclosure of the present specification, an identifier different from TMGI may be used as an identifier for identifying MBS service/session (multicast service/session or broadcast service/session). The scope of the disclosure of the present specification may include all other types of identifiers that can be used for distinguishing each MBS service/session.

In the various examples described in the disclosure of this specification, the UE may determine whether the UE enters the service area or whether the UE is located in the service area based on the multicast service area information. For example, based on the multicast service area information, if the UE determines that it enters the service area, or if it is determined that the UE is located in the service area, or if the UE determines that it has entered the service area, the UE may perform an operation to receive the multicast service. For example, in order to receive the multicast service, the LTE may perform an operation of requesting a join, or an operation of switching from receiving a service in a unicast method to receiving a service in a multicast method (For example, the LTE may perform an operation to receive the multicast service by performing various methods, such as an operation to request an AF, an operation to request a CN, etc.). For another example, when the UE determines that the UE is out of the service area based on the multicast service area information, or when the UE determines that the UE is out of the service area, or when the UE determines that the UE is located outside the service area, the UE may perform an operation to no longer receive the multicast service. For example, in order not to receive the corresponding multicast service anymore, the UE may perform an operation of requesting leave, and an operation of switching from receiving a service in a multicast method to receiving a service in a unicast method (For example, the UE may perform an operation to receive the multicast service by performing various methods, such as an operation to request an AF, an operation to request a CN, etc.).

In various examples described in the disclosure of this specification, the Content Provider / Server may make an MBS service request to SGS. These requests may be performed offline instead of being performed by the Content Provider/Server through the interface with 5GC, in this case, multicast service area configuration and update may be performed by a SGC NF (e.g., an MB-SMF).

In various examples described in the disclosure of this specification, the operation of the LTE requesting a join to the multicast service/session may be interpreted as an operation of requesting that the LTE creates a context for multicast service/session, requesting service reception for multicast service/session, and the like.

In various examples described in the disclosure of this specification, various operations and techniques have been described with a focus on multicast, but this is only an example, and the multicast-related operations and techniques described in various examples described in the disclosure of the present specification may also be applied to broadcast.

As described in the disclosure of the present specification with reference to various examples, a local multicast service serviced only in a specific area can be effectively supported. For example, with respect to a local multicast service serviced only in a specific area, by providing the UE with information on the area in which the service is provided, the UE can effectively receive the local multicast service. For example, a network node (e.g., SMF) provides location information in the form of 3GPP location to the UE, thus the UE may determine whether the UE is located within the service area more efficiently.

As described in the disclosure of the present specification with reference to various examples, a network node (e.g., a SMF, an AMF, etc.) may perform an operation of an NF that manages the latest service area of the multicast service. For example, a network node (e.g., the SMF, the AMF, etc.) may perform an operation as in the following example. A network node (e.g., the SMF, the AMF, etc.) may receive a message requesting service area information of a multicast service from the UE. Here, the multicast service may be identified by a TMGI. The multicast service may be a local multicast service. A network node (e.g., the SMF, the AMF, etc.) may request service area information from the MB-SMF that manages multicast service. A network node (e.g., the SMF, the AMF, etc.) may obtain multicast service area information from MB-SMF and provide multicast service area information to the UE. If the multicast service area change for TMGI occurs, a network node (e.g., the SMF, the AMF, etc.) can subscribe to an event (e.g., an event provided by MB-SMF) to be notified of a change in the multicast service area. When the multicast service area is changed, the MB-SMF notifies the network node (e.g., the SMF, the AMF, etc.) of the change of the multicast service area, the network node (e.g., the SMF, the AMF, etc.) may provide information related to the change of the multicast service area to the UE. Here, the multicast service area information may be a List of Cell IDs and/or a TAI list.

For reference, the operation of the terminal (e.g., LTE) described in this specification may be implemented by the apparatus of FIGS. 1 to 3 described above. For example, the terminal (e.g., UE) may be the first device 100 or the second device 200 of FIG. 1 . For example, an operation of a terminal (e.g., LTE) described herein may be processed by one or more processors 102 or 202 . The operation of the terminal described herein may be stored in one or more memories 104 or 204 in the form of an instruction/program (e.g. instruction, executable code) executable by one or more processors 102 or 202 . One or more processors 102 or 202 control one or more memories 104 or 204 and one or more transceivers 105 or 206, and may perform the operation of the terminal (e.g., LTE) described herein by executing instructions/programs stored in one or more memories 104 or 204.

In addition, instructions for performing an operation of a terminal (e.g., UE) described in the disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the disclosure of the present specification.

For reference, the operation of a network node (e.g., AMF, SMF, UPF, MB-SMF, MB-UPF, NRF, NEF, MBSF, NEF/MBSF, AF, etc.) or base station (e.g., NG-RAN, gNB, eNB, RAN, etc.) described herein may be implemented by the apparatus of FIGS. 1 to 3 to be described below. For example, a network node or a base station may be the first device 100a of FIG. 1 or the second device 100b of FIG. 1. For example, the operation of a network node or base station described herein may be processed by one or more processors 102 or 202. The operation of the terminal described herein may be stored in one or more memories 104 or 204 in the form of an instruction/program (e.g. instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of this specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the disclosure of the present specification is not limited to such specific embodiments, and thus, modifications, changes, or can be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing multicast-related communication, the method performed by a user equipment (LTE) and comprising:
determining that the LTE is located within the service area based on the first location information for the service area related to the local multicast service,
wherein the first location information includes geographic area information or civic address information;
transmitting a first join request message for joining the local multicast service to a Session Management Function (SMF), based on it is determined that the UE is located in the service area; and
receiving a join reject message from the SMF in response to the first join request message,
wherein the join reject message includes second location information for the service area, and
wherein the second location information includes one or more of a Cell ID list and a Tracking Area ID (TAI) list.

2. The method of claim 1,
wherein the join reject message further includes rejection reason information indicating that the UE is not located within the service area.

3. The method of claim 1, further comprising:
determining whether the LTE is located within the service area based on the second location information.

4. The method of claim 3, further comprising:
when it is determined that the LTE is located within the service area based on the second location information, transmitting a second join request message for participating in the local multicast service to the SMF.

5. The method of claim 4, further comprising:
when it is determined, based on the second location information, that the UE is not located within the service area, the second join request message is not transmitted.

6. The method of claim 1, further comprising:
receiving the first location information from an Application Function (AF).

7. A User Equipment (LTE) for performing multicast-related communication,
at least one processor; and
at least one memory for storing instructions and operably electrically connectable with the at least one processor,
wherein the operations performed based on the execution of the instructions by the at least one processor include:
determining that the LTE is located within the service area based on the first location information for the service area related to the local multicast service,
wherein the first location information includes geographic area information or civic address information;
transmitting a first join request message for joining the local multicast service to a Session Management Function (SMF), based on it is determined that the UE is located in the service area; and
receiving a join reject message from the SMF in response to the first join request message,
wherein the join reject message includes second location information for the service area,
wherein the second location information includes one or more of a Cell ID list and a Tracking Area ID (TAI) list.

8. The method of claim 7,
wherein the LTE is an autonomous driving device communicating with at least one of a mobile terminal, a network and an autonomous vehicle other than the UE.

9. An apparatus in mobile communication, comprising:
at least one processor; and
at least one memory for storing instructions and operably electrically connectable with the at least one processor;
wherein the operations performed based on the execution of the instructions by the at least one processor include:
determining that the apparatus is located within the service area based on the first location information for the service area related to the local multicast service,
wherein the first location information includes geographic area information or civic address information;
generating a first join request message for joining the local multicast service, based on it is determined that the apparatus is located in the service area; and
identifying a join reject message in response to the first join request message,
wherein the join reject message includes second location information for the service area, and
wherein the second location information includes one or more of a Cell ID list and a Tracking Area ID (TAI) list.

10. A non-transitory computer-readable storage medium having recorded thereon instructions, comprising:
wherein the instructions, when executed by one or more processors, cause the one or more processors to:
determining that the apparatus is located within the service area based on the first location information for the service area related to the local multicast service,
wherein the first location information includes geographic area information or civic address information;
generating a first join request message for joining the local multicast service, based on it is determined that the apparatus is located in the service area; and
identifying a join reject message in response to the first join request message,
wherein the join reject message includes second location information for the service area, and
wherein the second location information includes one or more of a Cell ID list and a Tracking Area ID (TAI) list.

11. A method for performing multicast-related communication, wherein the method performed by a Session Management Function (SMF) and comprising:
receiving, from a User Equipment (UE), a first join request message for joining a local multicast service;
determining whether the LTE is located in the service area based on location information on a service area related to the local multicast service; and
transmitting a join reject message to the UE in response to the first join request message based on determining that the UE is not located within the service area,
wherein the join reject message includes the location information, and
wherein the location information includes one or more of a Cell ID list and Tracking Area ID (TAI) list.

12. The method of claim 11,
wherein the join reject message further includes rejection reason information indicating that the UE is not located within the service area.

13. The method of claim 11,
wherein the second location information is used by the UE to determine whether the UE is located within the service area.

14. The method of claim 13, further comprising:
receiving a second join request message for joining the local multicast service from the UE.

15. The method of claim 14, further comprising:
when it is determined, by the UE, that the UE is not located within the service area, the second join request message is not transmitted.

16. A Session Management Function (SMF) for performing multicast-related communication,
at least one processor; and
at least one memory for storing instructions and operably electrically connectable with the at least one processor;
wherein the operations performed based on the execution of the instructions by the at least one processor include:
receiving, from a User Equipment (UE), a first join request message for joining a local multicast service;
determining whether the LTE is located in the service area based on location information on a service area related to the local multicast service; and
transmitting a join reject message to the UE in response to the first join request message based on determining that the UE is not located within the service area,
wherein the join reject message includes the location information, and
wherein the location information includes one or more of a Cell ID list and Tracking Area ID (TAI) list.
